# EUROPEAN PATENT APPLICATION

(11) **EP 3 251 757 A1**
(43) Date of publication of application: **06.12.2017**
(21) Application number: 16743603.9
(22) Date of filing: 28.01.2016
(51) Int. Cl.: B05D 7/00, B05D 3/06, B05D 7/24, G02C 7/00, G02C 7/02, G02C 7/10

(54) **METHOD FOR MANUFACTURING PLASTIC LENS HAVING COATING LAYER**

(30) Priority: 30.01.2015 JP 2015017866; 23.06.2015 JP 2015125230
(71) Applicant: Tokuyama Corporation, Shunan-shi, Yamaguchi 745-0053 (JP)
(72) Inventor: TAKENAKA Junji, Shunan-shi Yamaguchi 745-0053 (JP); MOMODA Junji, Shunan-shi Yamaguchi 745-0053 (JP); ASAHARA Yoshihiro, Shunan-shi Yamaguchi 745-0053 (JP); TAMUKAI Takashi, Shunan-shi Yamaguchi 745-0053 (JP)
(74) Representative: Adam, Holger
(86) International application number: PCT/JP2016/053295
(87) International publication number: WO 2016/122000

(57) **Abstract**

A cured coating layer can be provided to plastic lenses having various shapes with high productivity without causing deformation by providing a plastic lens for light exposure having an uncured coating layer composed of a photocurable composition on one surface and hydrogel adhered to the other surface, curing the uncured coating layer by exposing the uncured coating layer to light, and removing the hydrogel.

## Description

### TECHNICAL FIELD

The present invention relates to a method of producing a plastic lens covered with a coating layer. More specifically, it relates to a simple and reliable method of producing a plastic lens such as a spectacle lens having a coating layer on the surface.

### BACKGROUND ART

Photochromism is the reversible function of a certain compound that it changes its color swiftly upon exposure to light including ultraviolet light such as sunlight or light from a mercury lamp and returns to its original color when it is put in the dark by stopping its exposure to light and is applied for various uses.

For example, photochromism is applied in the field of spectacle lenses, and a plastic lens having photochromic properties is obtained by curing a polymerizable monomer mixed with a photochromic compound having the above property. As the photochromic compound, fulgimide compounds, spirooxazine compounds, chromene compounds, etc. all of which can be advantageously used for the above purpose were discovered.

As the method of producing a plastic lens having photochromic properties, there are proposed a method in which the surface of a lens having no photochromic properties is impregnated with a photochromic compound (to be referred to as "impregnation method" hereinafter), a method in which a coating layer having photochromic properties is formed on the surface of a plastic lens (to be referred to as "coating method" hereinafter) and a method in which a photochromic compound is dissolved in a monomer which is then polymerized to obtain a photochromic lens directly (to be referred to as "in-mass method" hereinafter).

As the above coating method, there is proposed a technique in which a coating agent prepared by dissolving a photochromic compound in a urethane oligomer is applied to a lens and thermally cured at 140°C for 40 minutes by using infrared light (refer to WO1998/37115).

There is also proposed a technique in which a coating agent is prepared by dissolving a photochromic compound in a mixture of monofunctional, bifunctional and polyfunctional radically polymerizable monomers, applied to the inner wall of a glass mold and photocured, and then a monomer is cast into the inside of the mold to be thermally cured (refer to US Patent No. 5914174).

There is further proposed a technique in which a coating agent prepared by mixing together N-alkoxymethyl (meth)acrylamide, a catalyst which is preferably an acidic catalyst and a photochromic compound is applied to a lens and thermally cured at 140°C for 40 minutes (refer to WO2000/36047).

There is still further proposed a technique in which a coating agent prepared by dissolving a photochromic compound in a monomer composition composed of only two or more bifunctional (meth)acrylic monomers is applied to a lens and photocured by using a 500 W lamp (refer to WO2001/02449). The surface temperature of the lens is 145 to 200°C at that time.

However, even in all the above methods, it is difficult to obtain a plastic lens having a coating layer by fully curing the coating agent applied to the surface of the plastic lens without deforming the plastic lens itself.

That is, as a result of research conducted by the inventors of the present invention into the method in which the photocurable coating agent applied to the surface of the plastic lens is cured, it was confirmed that, when photopolymerization is carried out by using light having high intensity while the plastic lens covered with the photocurable coating agent is held in such a manner that the coating agent applied surface faces up, there is a problem that the plastic lens having a thin center part is deformed. The cause of this problem is that the plastic lens is softened and deformed by heat derived from a light source used for curing as it cannot withstand stress generated when the coating agent is cured. This is remarkable particularly in the case of a plastic lens having a center part thickness of less than 2 mm and a peripheral part which is thicker than the center part.

When the intensity of irradiation light is reduced to suppress the occurrence of the above problem, the coating agent is not fully cured, adhesion between the plastic lens and the photochromic layer becomes unsatisfactory, and the surface hardness lowers. When curing is carried out for a long time, the reduction of productivity occurs.

As a method for solving the above problems, there is proposed a method in which the surface temperature of a plastic lens is set to 100°C or lower when a photocurable coating agent applied to the surface of the plastic lens is photocured (refer to JP-A 2004-012857).

As another method, there is proposed a method in which a plastic lens is held with an elastic body or a plastically deformable material to suppress the deformation of the lens (refer to WO2006/132200).

However, since the above method disclosed by JP-A 2004-012857 in which the surface temperature of the plastic lens is set to 100°C or lower is to control light intensity and irradiation time on the lens surface to be applied to the plastic lens, when this method is employed, light must be applied intermittently. Therefore, the optical curing time of the coating agent becomes long, thereby causing a productivity problem, and also it is necessary to control light intensity and light irradiation time according to the center thickness of the lens, thereby causing a complicated operation. The optical curing time can be shortened to a certain extent by using a method in which the plastic lens is cooled by bringing a tube for circulating cooling water into contact with the rear surface and further the side surface of the plastic lens. However, this method has problems that the structure of a device becomes complex and the cooling effect becomes nonuniform between a contact part between the tube and the plastic lens and a noncontact part.

In the above method disclosed by WO2006/132200, when the elastic body is used, its fittability to a plastic lens having an awkward shape such as a decentered lens is not always satisfactory and a gap is formed between the lens and the elastic body, thereby making it difficult to suppress thermal deformation completely. When the plastically deformable material is used, its fittability is not always satisfactory as well and when the plastically deformable material is removed from the plastic lens, part of the material remains on the plastic lens and cannot be removed completely even after it is washed. Thus, the above method has an operational problem.

### DISCLOSURE OF THE INVENTION

It is therefore an object of the present invention to provide a method capable of producing an object with high productivity without causing deformation in plastic lenses having various shapes and without requiring a special cooling device when a plastic lens having a coating layer is produced by applying a photocurable coating agent to the surface of the plastic lens and curing it.

The inventors of the present invention conducted intensive studies to solve the above problems and found that an uncured coating layer can be photocured without deforming a lens by suppressing a rise in the temperature of a plastic lens by adhering hydrogel to a surface opposite to the front surface on which the uncured coating layer has been formed, that is, the rear surface of the plastic lens having the uncured coating layer composed of a photocurable composition on the front surface. The present invention was accomplished based on this finding.

That is, the present invention is a method of producing a plastic lens having a cured coating layer, comprising the steps of:
providing a plastic lens for light exposure having an uncured coating layer composed of a photocurable composition on one surface of the plastic lens and hydrogel adhered to the other surface;
exposing the uncured coating layer to light to cure it; and
removing the hydrogel.

In the method of producing a plastic lens having a cured coating layer of the present invention, preferably, the dispersoid of the hydrogel contains a polysaccharide.

Further, the method of producing a plastic lens having a cured coating layer of the present invention is preferably applied to a plastic lens having a center part thickness of less than 2 mm and a peripheral part which is thicker than the center part as the plastic lens on which a cured coating layer is to be formed.

In the method of producing a plastic lens having a cured coating layer of the present invention, a plastic lens whose rear surface has been subjected to progressive, bifocal or trifocal processing is preferably used as the plastic lens on which a cured coating layer is to be formed.

### BRIEF DESCRIPTION OF THE DRAWINGS

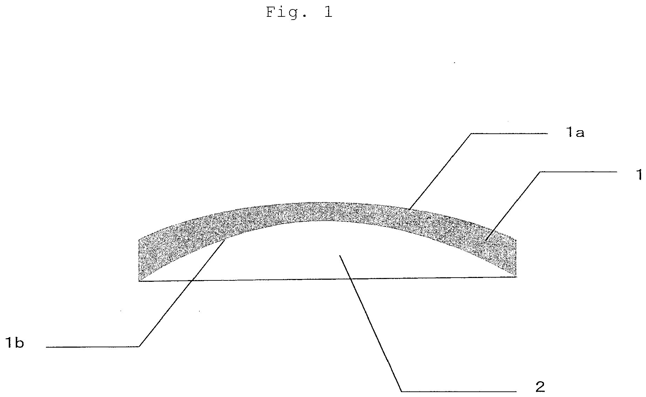

Fig. 1 schematically shows that hydrogel adheres to the rear surface of a plastic lens.

### BEST MODE FOR CARRYING OUT THE INVENTION

In the method of producing a plastic lens having a cured coating layer of the present invention, a plastic lens having a coating layer is produced by forming a coating layer composed of a cured body of a photocurable resin on the surface of a plastic lens.

The basic production process in the above production method of the present invention is the same as a conventional process for producing "a plastic lens having a coating layer composed of a cured body of a photocurable resin" and comprises a first step for forming an uncured coating layer composed of a photocurable composition on one surface of a plastic lens and a second step for curing the uncured coating layer by exposing the surface on which the uncured coating layer has been formed of the plastic lens to light from above.

In the above second step of the method of producing a plastic lens having a coating layer of the present invention, the plastic lens having an uncured coating layer obtained in the above first step is exposed to light from above the uncured coating layer formed front surface of the plastic lens to cure the uncured coating layer while hydrogel is adhered to a surface opposite to the uncured coating layer formed front surface. The uncured coating layer formed surface is referred to as "front surface" and the hydrogel adhered surface is referred to as "rear surface" hereinafter.

A description is subsequently given of materials used in the method of producing a plastic lens having a coating layer of the present invention.

### (plastic lens)

The plastic lens used in the method of producing a plastic lens having a coating layer of the present invention is not particularly limited, and a commonly used plastic lens can be used. A plastic lens having a center part thickness of less than 2 mm and a peripheral part which is thicker than the center part is particularly preferred as the effect of the present invention is large. In a concave meniscus lens for correcting shortsightedness out of plastic lenses for general-purpose spectacles, as the minus diopter becomes larger, the peripheral part gradually becomes thicker as compared with the center part. Therefore, there are many plastic lenses which satisfy this condition. Since this plastic lens has a thin center part, it tends to be subjected to physical deformation or thermal deformation. The method of producing a plastic lens having a coating layer of the present invention is particularly effective for the formation of a coating layer composed of a cured body of a photocurable composition on the front surface of this plastic lens.

Further, since the method of producing a plastic lens having a coating layer of the present invention can suppress thermal deformation by adhering hydrogel in accordance with the shape of even a plastic lens whose rear surface has been subjected to progressive, bifocal or trifocal processing, it can be particularly preferably used.

For example, a bifocal lens used for bifocal spectacles has a farsighted part used for viewing far and a shortsighted part used for viewing near. Since the shortsighted part is formed on the rear surface as a small portion in part of the lens, there is a boundary line between the farsighted part and the shortsighted part, and the small portion and another part of the lens differ from each other in curved shape (curvature). Heretofore, when a photocurable coating agent was applied to the surface of such a lens and cured to produce a plastic lens having a coating layer, the small portion and another part of the plastic lens differed in temperature, whereby the lens was apt to be deformed. According to the production method of the present invention, it is possible to adhere hydrogel to the entire rear surface of the plastic lens without a gap and to suppress a rise in the temperature of the plastic lens caused by the light exposure of the small portion at the time of curing, whereby the temperature of the plastic lens which is a whole bifocal lens can be made uniform. Therefore, the method can be particularly preferably used.

The material of the plastic lens in the present invention is not particularly limited. For example, known resins such as (meth) acrylic resin, polycarbonate-based resin, allyl-based resin, thiourethane-based resin, urethane-based resin or thioepoxy-based resin may be used without restriction.

A description is subsequently given of the photocurable composition.

### (photocurable composition)

In the method of producing a plastic lens having a coating layer of the present invention, the photocurable composition used in the above first step is a so-called "photocurable coating agent" which comprises a photopolymerizable monomer and a photopolymerization initiator as essential components. As the photopolymerizable monomer, for example, radically polymerizable monomers having a radically polymerizable group such as (meth)acryloyl group, (meth)acryloyloxy group, vinyl group, allyl group or styryl group may be used. Out of these, radically polymerizable monomers having a (meth) acryloyl group or (meth)acryloyloxy group are preferably used as they are easily acquired and have high curability. These radically polymerizable monomers may be used in combination of two or more in consideration of the characteristic properties of a cured body such as solvent resistance, hardness and heat resistance after the curing of the photocurable coating agent.

The photopolymerization initiator is used in an amount of 0.001 to 5 parts by mass based on 100 parts by mass of the total of all the radically polymerizable monomers. Preferred examples of the photopolymerization initiator include benzoin, benzoin methyl ether, benzoin butyl ether, benzophenol, acetophenone, 4,4'-dichlorobenzophenone, diethoxyacetophenone, 2-hydroxy-2-methyl-1-phenylpropan-1-one, benzylmethyl ketal, 1-(4-isopropylphenyl)-2-hydroxy-2-methylpropan-1-one, 1-hydroxycyclohexylphenyl ketone, 2-isopropylthioxanthone, bis(2,6-dimethoxybenzoyl-2,4,4-trimethyl-pentylphosphine oxide, bis(2,4,6-trimethylbenzoyl)-phenylphosphine oxide, 2,4,6-trimethylbenzoyldiphenyl-phosphine oxide and 2-benzyl-2-dimethylamino-1-(4-morpholinophenyl)butanone-1.

As the above photocurable composition, conventionally used photocurable coating agents may be used without restriction according to purpose such as the improvement of surface hardness, the provision of photochromic properties, the improvement of impact resistance or the improvement of adhesion to a hard coat layer or antireflection layer. For example, to improve the surface hardness, a composition comprising a monomer having three or more radically polymerizable groups and/or an organic-inorganic hybrid monomer is preferably used. To provide photochromic properties, "a photocurable coating agent comprising a photochromic compound" as disclosed in JP-A 2004-012857, more specifically, a composition comprising 0.1 to 20 parts by mass, specifically 0.5 to 15 parts by mass of a photochromic compound such as fulgimide compound, spirooxazine compound or chromene compound based on 100 parts by mass of a photopolymerizable monomer composition comprising a high-hardness monomer, for example, a monomer having three or more radically polymerizable groups and a low-hardness monomer, for example, a monomer having two radically polymerizable groups having a long hydrocarbon chain or polyethylene oxide chain as a structure between polymerizable groups is preferably used. The "photocurable coating agent comprising a photochromic compound" preferably comprises a radically polymerizable monomer having at least one epoxy group and at least one radically polymerizable group in the molecule (may be simply referred to as "epoxy-based monomer" hereinafter) and an amine compound such as triethanolamine so as to improve adhesion between the coating layer and the plastic lens. Further, to improve adhesion between the coating layer and the plastic lens, the composition preferably comprises either one of a radically polymerizable monomer having a silanol group or a group which produces a silanol group by hydrolysis (may be referred to as "silyl monomer" hereinafter) and a radically polymerizable monomer having an isocyanate group (may be referred to as "isocyanate monomer" hereinafter). A thermopolymerization initiator may be further added to the composition in addition to the above photopolymerization initiator. Preferred examples of the thermopolymerization initiator include diacyl peroxides, peroxy esters, percarbonates and azo compounds.

Further, additives such as a surfactant, antioxidant, radical scavenger, ultraviolet stabilizer, ultraviolet absorbent, release agent, coloring inhibitor, antistatic agent, fluorescent dye, dye, pigment, perfume and plasticizer may be added to the "photocurable coating agent comprising a photochromic compound" in order to prevent the yellowing and improve the moldability of the coating layer, improve the durability of the photochromic compound at the time of addition and improve color developing speed and fading speed.

A description is subsequently given of the hydrogel.

### (hydrogel)

The hydrogel in the production method of the present invention comprises a polymer compound as a dispersoid and water as a dispersion medium and becomes solid as a whole when the dispersoid crosslinks to form a network structure, thereby reducing flowability and holding water in the network structure. The hydrogel is composed mostly of water and has a higher specific heat capacity and a higher heat conductivity than the plastic lens. Therefore, when light exposure is carried out by adhering the hydrogel to the rear surface of the plastic lens, the function of radiating heat generated at the time of light exposure is obtained by the hydrogel with the result that a rise in the temperature of the plastic lens can be suppressed. Therefore, a plastic lens covered with a coating layer can be produced without causing the deformation of the plastic lens by heat. In addition, a light source having high output can be used as the light source used for light exposure without paying attention to exposure conditions.

A detailed description is subsequently given of the constituent components of the hydrogel.

The polymer compound which is a dispersoid is not particularly limited if it has the ability of forming a network structure by crosslinking (so-called "gel formability"). As the compound having gel formability, polysaccharides and proteins are known and may be used in the present invention. The polysaccharides are obtained by bonding monosaccharide molecules by a glycoside bond. Examples of the polysaccharides which may be used as the dispersoid in the present invention include agarose, carrageenan, glucomannan, starch, amylose, amylopectin, glycogen, xanthane gum, sodium alginate and potassium alginate.

Those which may be used as a dispersoid having gel formability in the present invention include proteins such as gelatin and fibrin.

Hydrogel containing the above agarose as the main component is generally called "agar" and hydrogel containing galactomannan as the main component is called "konjac". The agar is industrially available on the market as a powder, and the powder agar should be dispersed in the dispersion medium in the present invention.

The dispersion medium is preferably water but an organic solvent which is miscible with water may be added as long as gel formability is not inhibited. Examples of the organic solvent include methanol, ethanol, isopropanol and acetone.

Although the concentration of the dispersoid to the dispersion medium in the above hydrogel is not particularly limited, if it is too low, the physical strength of the hydrogel becomes weak and if it is too high, viscosity becomes high when the dispersoid is dissolved in the dispersion medium, thereby making it difficult to handle it. Therefore, the concentration of the dispersoid is 0.1 to 20 wt%, preferably 0.5 to 15 wt%, more preferably 1 to 10 wt%.

The melting temperature of the hydrogel is 50°C or higher, preferably 60°C or higher, more preferably 70°C or higher to prevent the melting of the hydrogel if the temperature of the plastic lens rises at the time of light exposure.

Out of the above dispersoids, agarose is particularly preferred as it has especially high ability of forming a network structure and the melting temperature of the hydrogel is especially high. That is, the hydrogel which is generally known as "agar" is particularly preferred.

Besides the dispersoid and the dispersion medium, additives may be mixed for a specific purpose. For example, saccharides having a low molecular weight such as monosaccharides and disaccharides may be mixed to accelerate the gelation speed and improve the physical strength.

Preferred examples of the above monosaccharides include glucose, mannose and galactose.

Preferred examples of the above disaccharides include sucrose, lactose, maltose and trehalose.

Further, a coagulant such as magnesium chloride, crude brine magnesium chloride, calcium chloride, calcium sulfate, magnesium sulfate, glucono delta lactone or calcium hydroxide may be mixed.

The above hydrogel can be used repeatedly after it is returned to an aqueous solution state again by heating and filtered as required after use.

A description is subsequently given of a hydrogel adhesion state and a hydrogel adhering method which are used in the present invention with reference to a drawing.

### (hydrogel adhesion state and hydrogel adhering method)

Fig. 1 is a sectional view of the plastic lens 1 and the hydrogel 2. The uncured coating layer (not shown) composed of the photocurable composition is formed on the front surface 1a of the plastic lens 1. To carry out light exposure, for example, the plastic lens 1 is held in such a manner that the front surface 1a faces up (the rear surface 1b faces down). The hydrogel 2 adheres to the rear surface 1b of the plastic lens 1. In the figure, the hydrogel 2 adheres to the entire rear surface of the plastic lens 1 but may adhere to at least part of the rear surface and does not need to adhere to the entire rear surface. For example, when the plastic lens 1 has a center part thickness of less than 2 mm and a peripheral part which is thicker than the center part, the hydrogel 2 may adhere only to a part having a thickness of less than 2 mm of the plastic lens.

When the photocurable coating agent is applied to the front surface of the plastic lens as described above, there occurs a problem that the coating agent adheres to the rear surface of the plastic lens. Particularly when the lens before the coating layer is formed is a finish lens whose front and rear surfaces are finished as optical surfaces, the step of polishing the rear surface is not carried out after the formation of the coating layer. Therefore, when the step is carried out while the coating agent adheres to the rear surface, a defective product is obtained. The adhesion of the coating agent to the rear surface of the plastic lens can be prevented by adhering the hydrogel to cover the entire rear surface of this plastic lens.

The method of adhering the hydrogel to the rear surface of the plastic lens is not particularly limited. However, a method in which an aqueous solution prepared by thermally dissolving a dispersoid is injected onto the rear surface of the plastic lens and then cooled to be gelled is preferred because the hydrogel can be fit to plastic lenses having various shapes.

Stated more specifically, a method in which the above aqueous solution prepared by thermally dissolving a dispersoid is injected into a depressed part while the rear surface (concave surface) of a plastic lens faces up to be gelled, a method in which a tape is wound round the side surface of a lens and the above aqueous solution prepared by thermally dissolving a dispersoid is injected to be gelled, and a method in which a plastic or glass sheet is mounted in such a manner that it faces the rear surface of a lens and a tape is wound round them to form a cavity, and the above aqueous solution prepared by thermally dissolving a dispersoid is injected into the cavity may be employed without restriction. Out of these, a method in which the aqueous solution prepared by thermally dissolving a dispersoid is injected into the depressed part while the rear surface (concave surface) of the plastic lens faces up to be gelled is particularly preferred because the operation is easy.

When it is important that the adhesion of the coating agent to the rear surface of the plastic lens should be prevented by adhering the hydrogel to cover the entire rear surface of the plastic lens, a plastic or glass sheet is mounted in such a manner that it faces the rear surface of the lens and a tape is wound round them to form a cavity, and the aqueous solution prepared by thermally dissolving a dispersoid is injected into the cavity is particularly preferred.

Although the method of injecting the above aqueous solution prepared by thermally dissolving a dispersoid is not particularly limited, a method in which part of the tape is removed and the above aqueous solution prepared by thermally dissolving a dispersoid is injected and then the tape is affixed again as required, or a method in which a plastic or glass sheet having one or more, preferably two or more holes is used to inject the above aqueous solution prepared by thermally dissolving a dispersoid from the holes (holes except for the injection holes serve to remove air) may be employed.

The liquid temperature for dissolving the dispersoid is, for example, 50 to 100°C, preferably 75 to 100°C, and the cooling temperature for gelation is, for example, 0 to 50°C, preferably 10 to 50°C, more preferably 15 to 35°C.

Although the time until the aqueous solution is gelled by cooling is not particularly limited, if it is too long, the work efficiency deteriorates. Therefore, the time is, for example, 1 minute to 1 day, preferably 3 minutes to 3 hours, more preferably 3 minutes to 1 hour.

A plastic, paper or glass sheet may be mounted on the other surface than the hydrogel adhered surface of the plastic lens as required.

### (method of producing a plastic lens having a coating layer)

As described above, the basic production process in the method of producing a plastic lens having a coating layer of the present invention is the same as a conventional production process for "a plastic lens having a coating layer composed of a cured body of a photocurable resin" and comprises a first step for forming an uncured coating layer composed of a photocurable composition on one surface of the plastic lens and a second step for curing the uncured coating layer of the plastic lens by irradiating light from above the uncured coating layer formed front surface.

In the above second step in the production method of the present invention, the plastic lens having an uncured coating layer obtained in the above first step should be irradiated with light from above the uncured coating layer formed front surface of the plastic lens while the hydrogel is adhered to the other surface opposite to the uncured coating layer formed front surface. The first step may be carried out after the hydrogel is adhered to the other surface opposite to the front surface on which the uncured coating layer is to be formed, or the second step may be carried out after the hydrogel is adhered to the rear surface after the first step. Preferably, the hydrogel is adhered before the first step as the operation is easy and the surface of the uncured coating layer can be kept clean. When the hydrogel is adhered to cover the rear surface of the plastic lens, the adhesion of the coating agent to the rear surface of the plastic lens in the first step can be prevented.

A description is subsequently given of the first step.

### (first step)

In the first step in the method of producing a plastic lens having a coating layer of the present invention, to form an uncured coating layer composed of a photocurable composition on the front surface of a raw material lens substrate, the photocurable composition should be applied to the front surface of the substrate. For application, a known coating method such as spin coating, spray coating, dip coating or dip-spin coating may be used without restriction. Prior to the coating of the photocurable composition, the plastic lens is preferably pre-treated to improve adhesion between the finally obtained coating layer and the substrate.

Examples of the pre-treatment include a chemical treatment with a basic aqueous solution or an acidic aqueous solution, a polishing treatment using an abrasive, a plasma treatment using atmospheric plasma or low-pressure plasma, a corona discharge treatment and a UV ozone treatment. In the pre-treatment of the plastic lens, two or more different treatments may be used in combination. To improve adhesion to the coating layer to be formed or the impact resistance of the plastic lens, another coating layer (to be also referred to as "primer layer" hereinafter) may be formed on the front surface of the raw material lens substrate in advance. The material of the primer layer is not particularly limited but preferred examples thereof include polyurethane resin, epoxy resin and polyacetal resin. Especially when the photocurable coating agent is aimed to provide photochromic properties, polyurethane resin is preferred as it has excellent adhesion. Although the method of forming a primer layer composed of the polyurethane resin is not particularly limited, a method in which a coating agent comprising a moisture curable polyurethane resin is applied and cured is preferred as the coating agent exhibits excellent adhesion.

A description is subsequently given of the second step.

### (second step)

To cure the uncured coating layer in the above second step, it is preferred that light exposure should be carried out in an atmosphere having an oxygen concentration of not more than 10,000 ppm, specifically not more than 1,000 ppm to cure the uncured coating layer completely without inhibiting polymerization. For example, it is preferred that light exposure should be carried out after the atmosphere in the inside of a device is fully substituted by an inert gas such as nitrogen, argon or helium. It is most preferred to use nitrogen as the inert gas from the viewpoint of cost.

In the method of producing a plastic lens having a coating layer of the present invention, it is not necessary to control exposure conditions strictly, and a light source which has been used in a conventional photopolymerization device may be used without restriction. For example, electrode lamps such as a metal halide lamp, super high-pressure mercury lamp, high-pressure mercury lamp, medium-pressure mercury lamp, bactericidal lamp, xenon lamp, carbon arc and tungsten lamp, and electrodeless lamps may be used.

It is preferred that a known cold reflector should be mounted above a light source and a filter which can absorb or reflect infrared light should be interposed between the light source and the raw material lens substrate as light having a reduced infrared component can be applied to a precursor lens and a rise in the temperature of the precursor lens surface can be reduced.

### (method of removing hydrogel)

After the above second step, the hydrogel used in the present invention can be removed from the plastic lens by a simple means, for example, peeling it off by hand, blowing air into the interface between the plastic lens and the hydrogel or vibrating the plastic lens. At this point, the hydrogel rarely remains on the plastic lens and can be easily washed away if it still remains on the plastic lens.

### (post-treatment)

The plastic lens having a cured coating layer, that is, a coating layer obtained by the method of producing a plastic lens having a coating layer of the present invention can be used as an optical material as it is. However, it is preferred to further form a hard coat layer on the obtained cured coating layer. By forming the hard coat layer, the abrasion resistance of the plastic lens can be improved.

The hard coat layer is formed by applying a hard coat agent and curing it in accordance with a generally employed method. As the hard coat agent, known hard coat agents such as, hard coat agents comprising silane coupling agents and sol of silicon, zirconium, antimony or aluminum oxide as the main component, and hard coat agents comprising an organic polymer as the main component may be used without restriction.

The cured coating layer or the hard coat layer which is further formed on the cured coating layer as required of the lens having the coating layer obtained in the second step can be subjected to an antireflection treatment, an antistatic treatment and a secondary treatment. These secondary treatments can be carried out by forming a metal oxide thin film layer such as SiO₂, TiO₂ or ZrO₂ by a vapor deposition method or an organic polymer thin film layer.

### EXAMPLES

The following examples are provided for the purpose of further illustrating the present invention but are in no way to be taken as limiting.

### Example 1

A thiourethane resin plastic lens having a minus diopter (MR-7, center thickness of 1 mm, peripheral thickness of 7 mm, diameter of 75 mm, spherical power of -6.00) was pre-treated by immersing in a 60°C 10 % alkaline aqueous solution for 5 minutes. After the pre-treatment, the plastic lens was washed with pure water and dried.

19 g of water was injected into a SUS container and heated at 80 to 90°C, and 1 g of agar (special grade reagent of Wako Pure Chemical Industries, Ltd.) was added to and dissolved in water under agitation to obtain a 5 wt% agar aqueous solution. 19 g of this aqueous solution was poured into the depressed part of the rear surface of the above thiourethane resin plastic lens and left at 25°C in a room for 15 minutes to be gelled.

A photocurable coating agent having the following composition was applied to the front surface of the plastic lens to whose rear surface the agar had been adhered as hydrogel in order to form an uncured coating layer. Coating was carried out by using the 1HDX2 spin coater of MIKASA Corporation (revolution of 600 rpm) to ensure that the thickness of the uncured coating layer became 40 µm.

### [composition of photocurable coating agent]

7 parts by mass of γ-methacryloyloxypropyl trimethoxysilane
15 parts by mass of trimethylolpropane trimethacrylate
10 parts by mass of polyester oligomer-hexaacrylate (EB-1830 of Daicel-UCB Co., Ltd.)
10 parts by mass of glycidyl methacrylate
15 parts by mass of polyethylene glycol diacrylate having an average molecular weight of 532
50 parts by mass of 2,2-bis(4-acryloyloxypolyethylene glycol phenyl)propane having an average molecular weight of 776
3 parts by mass of N-methyl diethanolamine
5 parts by mass of bis(1,2,2,6,6-pentamethyl-4-piperidyl)sebacate
0.5 part by mass of IRUGACURE1800: a mixture of 1-hydroxycyclohexylphenyl ketone and
bis(2,6-dimethoxybenzoyl)-2,4,4-trimethyl-pentylphosphine oxide in ratio of 3:1
2.5 parts by mass of a photochromic compound represented by the following formula

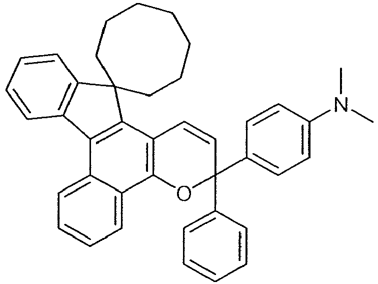

The lens having agar adhered to the rear surface and the photocurable coating agent applied to the front surface was exposed to light from a metal halide lamp having an irradiation intensity of about 100 mW/cm² and equipped with a cold reflector in a nitrogen gas atmosphere for 180 seconds while the uncured coating layer formed front surface (convex side) of the lens faced up so as to cure the photocurable coating composition. The surface temperature right after the exposure of this lens was 55°C. After the agar was removed by hand, the lens was held with the convex side facing down and further heated at 120°C for 2 hours.

The obtained plastic lens having a coating layer as a sample was checked for residual adhesion to the rear surface of the plastic lens, the existence of thermal deformation, and adhesion between the coating layer and the plastic lens. The evaluation results based on the following criteria were A for residual adhesion to the rear surface, A for the thermal deformation of the lens (visual check), ±0.00 for the thermal deformation of the lens (change in spherical power with a lens meter), and A for adhesion between the lens and the coating layer.
(A) residual adhesion to the rear surface of the lens: After the hydrogel or a substitute for the hydrogel was removed from the plastic lens after photopolymerization, residual adhesion to the rear surface of the lens was checked visually in three grades. A lens having no residual adhesion to the rear surface was evaluated as "A", a lens having slight residual adhesion was evaluated as "B", and a lens having large residual adhesion was evaluated as "C".
(B) thermal deformation of lens: After the hydrogel or a substitute for the hydrogel was removed from the plastic lens after photopolymerization, the deformation of the plastic lens was checked visually in four grades by using reflected light beams from two indoor fluorescent lamps arranged parallel to each other. As evaluation criteria, light beams were applied from the indoor fluorescent lamps to the convex surface or concave surface of the plastic lens. Based on the condition that the distance between two beams from the fluorescent lamps before polymerization is 1, the thermal deformation of the lens was evaluated as "A" when the distance between the beams after polymerization is 0.98 or more to less than 1.02 and the two beams from the fluorescent lamps are parallel to each other (no thermal deformation), as "B" when the distance between the beams after polymerization is 0.95 or more to less than 0.98 or 1.02 or more to less than 1.05 and the center parts of the beams from the two fluorescent lamps are rarely distorted as compared with those before polymerization (almost no thermal deformation before and after polymerization), as "C" when the distance between the beams from the fluorescent lamps after polymerization is 0.90 or more to less than 0. 95 or 1.05 or more to less than 1.10 and the center parts of the beams from the two fluorescent lamps are slightly distorted (slight thermal deformation), and as "E" when the distance between the beams is less than 0.90 to 1.10 or more and the center parts of the beams from the two fluorescent lamps are very distorted (thermal deformation).
(C) Thermal deformation of lens (change in spherical power with a lens meter): The spherical power of the plastic lens before photopolymerization was measured in advance by using the LM-1800PD auto lens meter (of NIDEK Co., Ltd.), the hydrogel or a substitute for the hydrogel was removed from the plastic lens after photopolymerization, and then the spherical power was measured again to calculate the difference between them. As the absolute value of the measurement value is smaller, the thermal deformation becomes smaller and as the absolute value of the measurement value is larger, the thermal deformation becomes larger.
(D) Adhesion between lens and coating layer: This was evaluated by a cross-cut tape test in accordance with JIS D-0202. That is, a cutter knife was used to make cuts in the surface of the coating layer of the plastic lens coated with a photocurable coating agent at intervals of about 1 mm so as to form 100 squares. A cellophane adhesive tape (Cellotape (registered trademark) of Nichiban Co. , Ltd.) was firmly affixed to them and then pulled at a stretch in a 90° direction from the surface to be removed, and the number of remaining squares of the coating layer was counted. As for evaluation (number of remaining squares after evaluation/number of squares before evaluation), 100/100 is evaluated as "A", less than 100/100 to 95/100 or more as "B", less than 95/100 to 80/100 or more as "C", less than 80/100 to 50/100 or more as "D" and less than 50/100 as "E".

### Example 2

A thiourethane resin decentered plastic lens (center thickness of 1 mm, peripheral thickness of 7 mm, diameter of 75 mm, spherical power of -6.00, astigmatic power of -4.00) was pre-treated by immersing in a 60°C 10 % alkaline aqueous solution for 5 minutes. After the pre-treatment, the lens was washed with pure water and dried.

17 g of water was injected into a SUS container and heated at 80 to 90°C, and 1 g of agar (special grade reagent of Wako Pure Chemical Industries, Ltd.) and 2 g of sucrose (special grade reagent of Wako Pure Chemical Industries, Ltd.) were added to and dissolved in water under agitation to obtain an aqueous solution containing 5 wt% of agar and 10 wt% of sucrose. 18 g of this aqueous solution was poured into the depressed part of the rear surface of the above thiourethane resin plastic lens and left at 25°C in a room for 15 minutes to be gelled.

A sample was prepared and evaluated in the same manner as in Example 1 except above. The evaluation results are shown in Table 1.

### Example 3

A thiourethane resin plastic lens (center thickness of 1 mm, peripheral thickness of 7 mm, diameter of 75 mm) was pre-treated by immersing in a 60°C 10 % alkaline aqueous solution for 5 minutes. After the pre-treatment, the plastic lens was washed with pure water and dried. A plastic flat sheet (thickness of 1 mm, diameter of 75 mm) having two circular holes with a diameter of 15 mm was mounted on the rear surface of the lens in such a manner that the peripheral part of the flat sheet came into contact with the peripheral part of the plastic lens, a 10 mm-wide tape was wound round the side surfaces to ensure that the sheet did not protrude from the front surface of the lens to form a space defined by the plastic rear surface, the above flat sheet and the tape.

19 g of water was injected into a SUS container and heated at 80 to 90°C, and 1 g of agar (special grade reagent of Wako Pure Chemical Industries, Ltd.) was added to and dissolved in water under agitation to obtain a 5 wt% agar aqueous solution. 19 g of this aqueous solution was poured from the holes of the plastic flat sheet and left at 25°C in a room for 15 minutes to be gelled.

A sample was prepared and evaluated in the same manner as in Example 1 except above. The evaluation results are shown in Table 1.

### Example 4

A thiourethane resin plastic lens having a small portion with a diameter of 25 mm in the rear surface (center thickness of 1 mm, peripheral thickness of 7 mm, diameter of 75 mm) was pre-treated by immersing in a 60°C 10 % alkaline aqueous solution for 5 minutes. After the pre-treatment, the plastic lens was washed with pure water and dried. A plastic flat sheet (thickness of 1 mm, diameter of 75 mm) having two circular holes with a diameter of 15 mm was mounted on the rear surface of the lens to ensure that the distance between the peripheral part of the flat sheet and the peripheral part of the plastic lens became 5 mm, and a 10 mm-wide tape was wound round the side surfaces to ensure that the flat sheet did not protrude from the front surface of the lens to form a space defined by the plastic rear surface, the above flat sheet and the tape.

19 g of water was injected into a SUS container and heated at 80 to 90°C, and 1 g of agar (special grade reagent of Wako Pure Chemical Industries, Ltd.) was added to and dissolved in water under agitation to obtain a 5 wt% agar aqueous solution. 40 g of this aqueous solution was poured into the above space from the holes of the plastic flat sheet and left at 25°C in a room for 15 minutes to be gelled.

A sample was prepared and evaluated in the same manner as in Example 1 except above. The evaluation results are shown in Table 1.

### Example 5

A thiourethane resin plastic lens having a minus diopter (MR-7, center thickness of 1 mm, peripheral thickness of 7 mm, diameter of 75 mm, spherical power of -6.00) was pre-treated by immersing in a 60°C 10 % alkaline aqueous solution for 5 minutes. After the pre-treatment, the plastic lens was washed with pure water and dried. A plastic flat sheet (thickness of 1 mm, diameter of 75 mm) having two circular holes with a diameter of 15 mm was mounted on the rear surface of the lens to ensure that the peripheral part of the flat sheet came into contact with the peripheral part of the plastic lens, and a 10 mm-wide tape was wound round the side surfaces to ensure that the sheet did not protrude from the front surface of the lens.

98 g of water was injected into a SUS container and heated at 80 to 90°C, and 2 g of agar (special grade reagent of Wako Pure Chemical Industries, Ltd.) was added to and dissolved in water under agitation to obtain a 2 wt% agar aqueous solution. 28 g of this aqueous solution was poured from the holes of the plastic flat sheet and left at 25°C in a room for 15 minutes to be gelled.

A sample was prepared and evaluated in the same manner as in Example 3 except above. The evaluation results are shown in Table 1.

### Examples 6 to 14

Samples were prepared and evaluated in the same manner as in Example 5 except that plastic lenses shown in Table 2 were used and hydrogel was prepared under conditions shown in Table 2. The evaluation results are shown in Table 1.

### Example 15

A thiourethane resin plastic lens having a minus diopter (MR-7, center thickness of 1 mm, peripheral thickness of 7 mm, diameter of 75 mm, spherical power of -5.98-6.00) was pre-treated by immersing in a 60°C 10 % alkaline aqueous solution for 5 minutes. After the pre-treatment, the plastic lens was washed with pure water and dried.

Then, a 10 mm-wide tape was wound round the side surfaces to ensure that the sheet did not protrude from the front surface of the lens.

98 g of water was injected into a SUS container and heated at 80 to 90°C, and 2 g of agar (special grade reagent of Wako Pure Chemical Industries, Ltd.) was added to and dissolved in water under agitation to obtain a 2 wt% agar aqueous solution. 25 g of this aqueous solution was poured from the holes of the plastic flat sheet and left at 25°C in a room for 15 minutes to be gelled.

A sample was prepared and evaluated in the same manner as in Example 1. The evaluation results are shown in Table 1.

### Examples 16 and 17

Samples were prepared and evaluated in the same manner as in Example 1 except that the 2 wt% agar aqueous solution prepared in Example 5 was used as hydrogel and 2 g (Example 16) and 8 g (Example 17) of the hydrogel were used. The evaluation results are shown in Table 1.

### Example 18

A sample was prepared and evaluated in the same manner as in Example 1 except that the sample was exposed to light from a metal halide lamp from below while the uncured coating layer formed front surface (convex side) faced down. The evaluation results are shown in Table 1.

### Example 19

A sample was prepared and evaluated in the same manner as in Example 1 except that light from a metal halide lamp having an irradiation intensity of 200 mW/cm² was used to carry out light exposure for 90 seconds. The evaluation results are shown in Table 1.

### Example 20

A sample was prepared and evaluated in the same manner as in Example 1 except that a photochromic compound was not used as the photocurable coating agent composition. The evaluation results are shown in Table 1.

### Comparative Example 1

A sample was prepared and evaluated in the same manner as in Example 1 except that a thiourethane resin plastic lens having a minus diopter (MR-7, center thickness of 1 mm, peripheral thickness of 7 mm, diameter of 75 mm, spherical power of -6.00) was used and light exposure was carried out without adhering agar as hydrogel. The evaluation results are shown in Table 3.

### Comparative Example 2

A sample was prepared and evaluated in the same manner as in Example 1 except that a thiourethane resin decentered plastic lens having a minus diopter (MR-7, center thickness of 1 mm, peripheral thickness of 7 mm, diameter of 75 mm, spherical power of -6.00, astigmatic power of -4.00) was used and a silicone-based soft lining material for denture base (manufactured by Tokuyama Dental Corporation, trade name: Sofreliner Medium Soft) was adhered as an elastic material in place of hydrogel to carry out light exposure. The evaluation results are shown in Table 3.

### Comparative Example 3

A sample was prepared and evaluated in the same manner as in Example 1 except that a thiourethane resin plastic lens having a minus diopter (MR-7, center thickness of 1 mm, peripheral thickness of 7 mm, lens diameter of 75 mm, spherical power of -6.00) was used and a polybutene-based nondrying putty material (manufactured by Matsumura Oil Co., Ltd., Neosealer MS-N12) was adhered as a plastically deformable material in place of hydrogel to carry out light exposure. The evaluation results are shown in Table 3.

### Comparative Example 4

A sample was prepared and evaluated in the same manner as in Example 1 except that a thiourethane resin plastic lens having a minus diopter (MR-7, center thickness of 1 mm, peripheral thickness of 7 mm, diameter of 75 mm, spherical power of -6.00) was used and a silicone-based soft lining material for denture base (manufactured by Tokuyama Dental Corporation, trade name: Sofreliner Medium Soft) was adhered as an elastic material in place of hydrogel to carry out light exposure. The evaluation results are shown in Table 3.

As obvious from the results shown in Table 1, when hydrogel was adhered by the method of the present invention, a rise in the temperature of the plastic lens can be suppressed, thereby causing no thermal deformation and making it possible to form a coating layer composed of a cured body of a photocurable composition on the front surface of the plastic lens. In contrast to this, when hydrogel was not adhered as shown in Comparative Example 1, the temperature of the plastic lens rises, thereby causing thermal deformation. As shown in Comparative Examples 2 to 4, when the elastic material or the plastically deformable material was adhered in place of the hydrogel to carry out light exposure, fittability between the lens and the plastically deformable material was unsatisfactory, thereby making it impossible to suppress a rise in the temperature of the lens with the result of thermal deformation. Further, residual adhesion to the rear surface of the lens occurred.

**Table 1**

| | Evaluation results | | | | |
|---|---|---|---|---|---|
| | Lens temperature after light exposure | Residual adhesion to rear surface of lens | Thermal deformation of lens (visual inspection) | Thermal deformation of lens (change in spherical power with lens meter) | Adhesion |
| Ex.1 | 55°C | A | A | Before photopolymerization:-6.01 | A |
| | | | | After photopolymerization:-6.01 | |
| | | | | Change:±0.00 | |
| Ex.2 | 55°C | A | A | Before photopolymerization:-6.00 | A |
| | | | | After photopolymerization:-6.01 | |
| | | | | Change:-0.01 | |
| Ex.3 | 55°C | A | A | Before photopolymerization:-6.01 | A |
| | | | | After photopolymerization:-6.01 | |
| | | | | Change:±0.00 | |
| Ex.4 | 55°C | A | A | Before photopolymerization:-6.00 | A |
| | | | | After photopolymerization:-6.01 | |
| | | | | Change:-0.01 | |
| Ex.5 | 55°C | A | A | Before photopolymerization:-6.02 | A |
| | | | | After photopolymerization:-6.00 | |
| | | | | Change:+0.02 | |
| Ex.6 | 55°C | A | A | Before photopolymerization:-6.00 | A |
| | | | | After photopolymerization:-6.00 | |
| | | | | Change:+0.00 | |
| Ex.7 | 55°C | A | A | Before photopolymerization:-6.01 | A |
| | | | | After photopolymerization:-6.00 | |
| | | | | Change:+0.01 | |
| Ex.8 | 55°C | A | A | Before photopolymerization:-6.02 | A |
| | | | | After photopolymerization:-6.00 | |
| | | | | Change:+0.02 | |
| Ex.9 | 56°C | A | A | Before photopolymerization:-5.99 | A |
| | | | | After photopolymerization:-6.00 | |
| | | | | Change:+0.01 | |
| Ex.10 | 56°C | A | A | Before photopolymerization:-5.99 | A |
| | | | | After photopolymerization:-6.00 | |
| | | | | Change:+0.01 | |
| Ex.11 | 55°C | A | A | Before photopolymerization:-5.99 | A |
| | | | | After photopolymerization:-5.99 | |
| | | | | Change:±0.00 | |
| Ex.12 | 55°C | A | A | Before photopolymerization:-5.99 | A |
| | | | | After photopolymerization:-6.00 | |
| | | | | Change:+0.01 | |
| Ex.13 | 57°C | A | A | Before photopolymerization:+4.01 | A |
| | | | | After photopolymerization:+4.01 | |
| | | | | Change:±0.00 | |
| Ex.14 | 55°C | A | A | Before photopolymerization:+0.02 | A |
| | | | | After photopolymerization:+0.02 | |
| | | | | Change:±0.00 | |
| Ex.15 | 55°C | A | A | Before photopolymerization:-5.98 | A |
| | | | | After photopolymerization:-5.99 | |
| | | | | Change:-0.01 | |
| Ex.16 | 68°C | A | B | Before photopolymerization:-6.01 | A |
| | | | | After photopolymerization:-5.97 | |
| | | | | Change:+0.04 | |
| Ex.17 | 58°C | A | A | Before photopolymerization:-6.00 | A |
| | | | | After photopolymerization:-6.00 | |
| | | | | Change::±0.00 | |
| Ex.18 | 58°C | A | A | Before photopolymerization:-6.00 | A |
| | | | | After photopolymerization:-6.01 | |
| | | | | Change:-0.01 | |
| Ex.19 | 55°C | A | A | Before photopolymerization:-6.01 | A |
| | | | | After photopolymerization:-6.03 | |
| | | | | Change:-0.02 | |
| Ex.20 | 55°C | A | A | Before photopolymerization:-6.01 | A |
| | | | | After photopolymerization:-6.01 | |
| | | | | Change:±0.00 | |

| | | | | | |
|---|---|---|---|---|---|
| Ex.: Example | | | | | |

**Table 2**

| | Plastic lens | | Hydrogel | | | | | | |
|---|---|---|---|---|---|---|---|---|---|
| | Material | Shape | Dispersoid | Dispersion medium | Concentration | Charged amount | Liquid temperature for dissolving dispersoid | Cooling temperature for gelation | time required for gelation |
| Ex. 6 | Thiourethane (MR-7) | Lens having minus diopter | Agar 12.5g | Water 87.5g | Agar 12.5 wt% | 28g | 80-90°C | 25°C | 15mins |
| | | Center thickness 1mm | | | | | | | |
| | | Peripheral thickness 7mm | | | | | | | |
| | | Diameter 75mm | | | | | | | |
| | | Spherical power-6.00 | | | | | | | |
| Ex. 7 | Thiourethane (MR-7) | Lens having minus diopter | Konjac 3g Calcium hydroxide 0.2g | Water 96.8 g | Konjac 3 wt%, Calcium hydroxide 0.2 wt% | 28g | 70-80°C | 25°C | 2hours |
| | | Center thickness 1mm | | | | | | | |
| | | Peripheral thickness 7mm | | | | | | | |
| | | Diameter 75mm | | | | | | | |
| | | Spherical power-6.00 | | | | | | | |
| Ex. 8 | Thiourethane (MR-7) | Lens having minus diopter | Gelatin 5g | Water 95 g | Gelatine 5 wt% | 28g | 70-80°C | 5°C | 2hours |
| | | Center thickness 1mm | | | | | | | |
| | | Peripheral thickness 7mm | | | | | | | |
| | | Diameter 75mm | | | | | | | |
| | | Spherical power-6.00 | | | | | | | |
| Ex. 9 | (meth) acryl (PMMA) | Lens having minus diopter | Agar 2g | Water 98g | Agar 2 wt% | 30g | 80-90°C | 25°C | 15mins |
| | | Center thickness 1mm | | | | | | | |
| | | Peripheral thickness 8mm | | | | | | | |
| | | Diameter 75mm | | | | | | | |
| | | Spherical power-6.00 | | | | | | | |
| Ex. 10 | Polycarbonate | Lens having minus diopter | Agar 2g | Water 98g | Agar 2 wt% | 32g | 80-90°C | 25°C | 15mins |
| | | Center thickness 1mm | | | | | | | |
| | | Peripheral thickness 9mm | | | | | | | |
| | | Diameter 75mm | | | | | | | |
| | | Spherical power-6.00 | | | | | | | |
| Ex. 11 | Allyl (CR-39) | Lens having minus diopter | Agar 2g | Water 98g | Agar 2 wt% | 28g | 80-90°C | 25°C | 15mins |
| | | Center thickness 2mm | | | | | | | |
| | | Peripheral thickness 11mm | | | | | | | |
| | | Diameter 70mm | | | | | | | |
| | | Spherical power-6.00 | | | | | | | |

| Material | Shape | Dispersoid | Dispersion medium | Concentration | Charged amount | Liquid temperature for dissolving dispersoid | Cooling temperature for gelation | Time required for gelation | |
|---|---|---|---|---|---|---|---|---|---|
| Ex. 12 | Thioepoxy (MR-174) | Lens having minus diopter | Agar 2g | Water 98g | Agar 2 wt% | 24g | 80-90°C | 25°C | 15mins |
| | | Center thickness 1mm | | | | | | | |
| | | Peripheral thickness 6mm | | | | | | | |
| | | Diameter 75mm | | | | | | | |
| | | Spherical power-6.00 | | | | | | | |
| Ex. 13 | Thiourethane (MR-7) | Lens having minus diopter | Agar 2g | Water 98g | Agar 2 wt% | 13g | 80-90°C | 25°C | 15mins |
| | | Center thickness 4mm | | | | | | | |
| | | Peripheral thickness 1mm | | | | | | | |
| | | Diameter 65mm | | | | | | | |
| | | Spherical power+4.00 | | | | | | | |
| Ex. 14 | Thiourethane (MR-7) | semi-finish lens | Agar 2g | Water 98g | Agar 2 wt% | 28g | 80-90°C | 25°C | 15mins |
| | | Center thickness 9mm | | | | | | | |
| | | Peripheral thickness 9mm | | | | | | | |
| | | Diameter 75mm | | | | | | | |
| | | Spherical power+0.00 | | | | | | | |

| | | | | | | | | | |
|---|---|---|---|---|---|---|---|---|---|
| Ex. Example | | | | | | | | | |

**Table 3**

| | Evaluation results | | | | |
|---|---|---|---|---|---|
| | Lens temperature after light exposure | Residual adhesion to rear surface of lens | Thermal deformation of lens (visual inspection) | Thermal deformation of lens (change in spherical power with lens meter | Adhesion |
| C.Ex.1 | 110°C | - | E | Before photo.: -6.01 | A |
| | | | | After photo.: -5.57 | |
| | | | | Change: +0.44 | |
| C.Ex.2 | 90°C | C | C | Before photo.: -6.00 | A |
| | | | | After photo.: -5.70 | |
| | | | | Change: +0.30 | |
| C.Ex.3 | 78°C | C | C | Before photo.: -6.00 | A |
| | | | | After photo.: -5.78 | |
| | | | | Change: +0.22 | |
| C.Ex.4 | 88°C | C | A | Before photo.: -6.00 | A |
| | | | | After photo.: -5.88 | |
| | | | | Change: +0.12 | |

| | | | | | |
|---|---|---|---|---|---|
| C. Ex.: Comparative Example photo.: photopolymerization | | | | | |

### Effect of the Invention

According to the method of producing a plastic lens having a coating layer of the present invention, when a photocurable coating agent is applied to the front surface of a plastic lens and cured to produce a plastic lens having a coating layer, the deformation of the plastic lens at the time of production can be prevented by adhering hydrogel to a surface opposite to the surface on which the coating layer is to be formed, that is, the rear surface. In addition, the hydrogel can be formed on the rear surface of the plastic lens by injecting an aqueous solution prepared by thermally dissolving a hydrogel dispersoid onto the rear surface of the plastic lens and cooling it, whereby lenses having various shapes can be used.

Further, the hydrogel adhering to the rear surface of the plastic lens has the function of radiating heat produced at the time of light exposure, thereby making it possible to suppress a rise in the temperature of the plastic lens at the time of curing by exposure. Therefore, a plastic lens having a coating layer can be produced without causing the deformation of the plastic lens by heat. In addition, since a light source having high output can be used as a light source used for exposure without paying special attention to exposure conditions, high productivity can be ensured. Further, since a special cooling device for cooling the lens is not required, the cost and size of production equipment can be reduced.

Further, when the photocurable coating agent is applied to the front surface of the plastic lens, there is a problem that the coating agent adheres to the rear surface of the plastic lens. Especially when the lens before the formation of the coating layer is a finish lens whose front surface and rear surface have been finished as an optical surface, the step of polishing the rear surface after the formation of the coating layer is not carried out. Therefore, when the step is proceeded out while the coating agent adheres to the rear surface, a defective product is produced by contamination. By adhering hydrogel to cover the entire rear surface of this plastic lens, the adhesion of the coating agent to the rear surface of the plastic lens can be prevented.

In addition, the hydrogel can be easily removed from the lens after use and does not remain on the plastic lens at the time of removal. If it remains on the plastic lens, it can be easily washed away with water and can be used repeatedly by heating, thereby making it possible to ensure high productivity and economic efficiency.

## Claims

1. A method of producing a plastic lens having a cured coating layer, comprising the steps of:
providing a plastic lens for light exposure having an uncured coating layer composed of a photocurable composition on one surface and hydrogel adhered to the other surface of the plastic lens;
curing the uncured coating layer by exposing the uncured coating layer to light; and
removing the hydrogel.

2. The method according to claim 1, wherein the plastic lens for light exposure is provided by adhering hydrogel to one surface and then forming an uncured coating layer on the other surface of the plastic lens.

3. The method according to claim 1, wherein the plastic lens for light exposure is provided by forming an uncured coating layer on one surface and then adhering hydrogel to the other surface of the plastic lens.

4. The method of producing a plastic lens having a cured coating layer according to claim 1, wherein the photocurable composition comprises a photochromic compound.

5. The method of producing a plastic lens having a cured coating layer according to claim 1, wherein the other surface of the plastic lens is a concave surface, a flat sheet is temporarily fixed to cover the concave surface, and an aqueous solution prepared by dissolving hydrogel by heat is injected into a space defined by the concave surface and the flat sheet and cooled to be solidified so as to adhere the hydrogel to the other surface.

6. The method of producing a plastic lens having a cured coating layer according to claim 1, wherein the hydrogel contains a polysaccharide in a dispersoid.

7. The method of producing a plastic lens having a cured coating layer according to claim 6, wherein the dispersoid of the hydrogel contains at least one polysaccharide selected from the group consisting of agarose, carrageenan, glucomannan, starch, amylose, amylopectin, glycogen, xanthane gum, sodium alginate and potassium alginate.

8. The method of producing a plastic lens having a cured coating layer according to claim 1, wherein the hydrogel is agar.

9. The method of producing a plastic lens having a cured coating layer according to claim 1, wherein the melting temperature of the hydrogel is 50°C or higher.

10. The method of producing a plastic lens having a cured coating layer according to claim 1, wherein the plastic lens has a center part thickness of less than 2 mm and a peripheral part which is thicker than the center part.

11. The method of producing a plastic lens having a cured coating layer according to claim 1, wherein the plastic lens is a plastic lens whose rear surface has been subjected to progressive, bifocal or trifocal processing.
